# FASCICULE DE BREVET EUROPEEN

(11) **EP 2 783 112 B1**
(45) Date de publication et mention de la délivrance du brevet: **11.09.2019**
(21) Numéro de dépôt: 12795572.2
(22) Date de dépôt: 19.11.2012
(51) Int. Cl.: F03H 1/00

(54) **PROPULSEUR À EFFET HALL**
HALL-EFFEKT-ANTRIEB
HALL-EFFECT THRUSTER

(30) Priorité: 22.11.2011 FR 1160635
(43) Date de publication de la demande: 01.10.2014
(73) Titulaire: Safran Aircraft Engines, 75015 Paris (FR)
(72) Inventeur: MARCHANDISE, Frédéric Raphaël Jean, 27200 Vernon (FR); LORAND, Anthony Claude Bernard, 27940 Notre Dame De L'isle (FR); VIAL, Vanessa Marjorie, 27200 Vernon (FR)
(74) Mandataire: Calvo de Nó, Rodrigo
(86) Numéro de dépôt international: PCT/FR2012/052659
(87) Numéro de publication internationale: WO 2013/076409

(56) Documents cités:
- EP-A1- 1 021 073
- US-A1- 2002 145 389
- US-B2- 6 919 672
- L. GARRIGUES ET AL: "Performance Modeling of a Thrust Vectoring Device for Hall Effect Thrusters", JOURNAL OF PROPULSION AND POWER, vol. 25, no. 5, 1 septembre 2009 (2009-09-01), pages 1003-1012, XP055032833, ISSN: 0748-4658, DOI: 10.2514/1.39680 cité dans la demande

## Description

La présente invention concerne le domaine des propulseurs à effet de Hall.

L'invention concerne plus particulièrement un propulseur à effet de Hall à poussée orientable comportant un canal annulaire, une anode, un circuit d'injection, un circuit magnétique, et une cathode. Le canal annulaire est délimité par deux parois concentriques avec un axe central, présente une extrémité ouverte et une extrémité fermée, et comporte un segment amont, du côté de l'extrémité fermée, divisé par des parois radiales en plusieurs caissons séparés. L'anode est située à l'extrémité fermée du canal annulaire. Le circuit d'injection est apte à injecter un gaz propulsif, comme, par exemple du Xénon, dans les caissons du canal annulaire, et comporte au moins un dispositif de régulation individuelle de débit de chaque caisson. Le circuit magnétique est apte à générer un champ magnétique à l'extrémité ouverte du canal annulaire. La cathode est située à l'extérieur de l'extrémité ouverte du canal annulaire.

Les termes « amont » et « aval », dans le présent contexte, sont définis par rapport au sens de circulation normal du gaz propulsif dans la direction définie par l'axe central du canal annulaire.

Typiquement, dans un tel propulseur à effet de Hall en fonctionnement, des électrons émis par la cathode et attirés vers l'anode au fond du canal annulaire sont piégés par le champ magnétique dans des trajectoires spirales entre les deux parois, formant ainsi une grille cathodique virtuelle. Des électrons échappant de cette enceinte magnétique en direction de l'anode entrent en collision avec des atomes du gaz propulsif injecté dans le canal annulaire par le circuit d'injection, créant ainsi un plasma ionisé.

Les ions positifs du plasma sont accélérés par le champ électrique régnant entre l'anode et la grille cathodique virtuelle formée par le nuage d'électrons piégés par le champ magnétique à l'extrémité ouverte du canal annulaire. Comme la masse de ces ions positifs est très supérieure à celle des électrons, leur trajectoire est à peine affectée par le champ magnétique. Les ions de ce jet plasmatique sont finalement neutralisés en aval du champ magnétique par des électrons émis par la cathode ou ayant été produits par la ionisation du plasma.

On a commencé à utiliser les propulseurs à effet de Hall dans des systèmes de commande d'orientation et/ou trajectoire (AOCS, de l'anglais « attitude and orbit control systems ») d'engins spatiaux et en particulier dans des AOCS de satellites géostationnaires. Dans cette fonction, les propulseurs à effet de Hall ont l'avantage de permettre un pilotage précis de l'orientation et/ou la position de l'engin avec une masse et une complexité sensiblement moindres que les systèmes classiques utilisant des dispositifs inertiels, tels que, par exemple, des roues de réaction, en combinaison avec des propulseurs chimiques pour leur désaturation.

Typiquement, la force de propulsion d'un propulseur à effet de Hall n'est pas orientable, ce qui peut obliger à utiliser simultanément plusieurs propulseurs à effet de Hall pour obtenir une force de propulsion avec l'orientation souhaité pour un changement d'orientation et/ou position de l'engin spatial. Ceci implique en particulier un circuit d'alimentation électrique des propulseurs assez complexe. Alternativement, un propulseur à effet de Hall monté sur un châssis pivotant pour orienter la force de propulsion du propulseur est décrit, par exemple, dans l'article « Inmarsat 4F1 Plasma Propulsion System Initial Flight Opérations » (IEPC-2005-082), présenté par H. Grey, S. Provost, M. Glogowski et A. Demaire, dans la 29ème Conférence Internationale sur la Propulsion Electrique en 2005 à Princeton aux Etats-Unis. Toutefois, un tel châssis pivotant présente une complexité mécanique considérable, et nécessite des pièces mobiles, toujours susceptibles de blocage dans l'environnement très exigeant d'un engin spatial.

Pour pallier ces inconvénients, un propulseur à effet de Hall a été proposé dans le brevet US 5,845,880, dans lequel la poussée peut être orientée par un dernier étage magnétique divisé en secteurs individuellement activables. L'orientation de la poussée est ainsi variée par variation du champ magnétique, ce qui présente des inconvénients pour le maintien de l'enceinte magnétique dans tout le périmètre de l'extrémité ouverte du canal annulaire, et donc de la grille cathodique virtuelle. En outre l'alimentation électrique du dernier étage magnétique en puissance variable ajoute aussi un certain degré de complexité au propulseur.

Dans l'article « Performance and Lifetime Assessment of a Thrust Steering Device for the PPS® 1350 Hall-Effect Plasma Thruster", d'O. Duchemin, M. Saverdi et D. Estublier, publié dans la conférence "Space Propulsion 2008", du 5 au 8 mai 2008 à Heraklion, Grèce, et dans l'article « Performance Modeling of a Thrust Vectoring Device for Hall Effect Thrusters », publié dans le « Journal of Propulsion and Power », Vol. 25, No. 5, Septembre-Octobre 2009, on a décrit des essais sur un propulseur à effet de Hall à poussée orientable, similaire à celui du brevet US 5,845,880 mais comprenant, à part un dernier étage magnétique divisé en secteurs individuellement activables, une pluralité de tuyères d'injection de gaz propulsif distribuées dans le canal annulaire, avec une régulation de débit individuelle pour obtenir une distribution variable et non-uniforme du gaz injecté dans le canal annulaire. Toutefois, dans ces articles, l'orientation de poussée par non-uniformité du débit de gaz injecté dans le canal annulaire a été décrite comme relativement inefficace, et même déconseillée en vue de la complexité supplémentaire des dispositifs de régulation de débit.

La demande de brevet européen EP 1 021 073 A1 décrit également un propulseur à effet de Hall à poussée orientable comportant une pluralité de tuyères d'injection de gaz propulsif distribuées dans le canal annulaire et ayant une régulation de débit individuelle. En outre, dans ce propulseur, des caissons sont formés dans le canal annulaire par des parois radiales. Toutefois, dans ce document, la distribution non-uniforme du débit de gaz dans le canal annulaire est proposée pour déplacer latéralement l'axe de poussée sans changer son orientation. Le circuit magnétique comporte un étage final avec un pôle intérieur décalé axialement en amont par rapport au pôle extérieur, de manière à concentrer le jet de gaz propulsif ionisé. Comme dans le brevet US 5,845,880, l'orientation de la poussée est effectuée par un champ magnétique non-uniforme, l'étage magnétique final étant aussi divisé en secteurs individuellement activables.

L'invention vise à proposer un propulseur à effet de Hall dont la poussée soit orientable de manière plus efficace, sans devoir recourir à un pilotage du champ magnétique ou à un pivotement mécanique du propulseur.

Dans au moins un mode de réalisation, ce but est atteint grâce au fait que, dans un étage final du circuit magnétique comportant un pôle intérieur et un pôle extérieur opposés, le pôle intérieur est décalé axialement en aval par rapport au pôle extérieur, de manière à ce que le champ magnétique soit incliné par rapport à un plan transversal du propulseur et le canal annulaire comporte un segment aval, du côté de l'extrémité ouverte, avec un plan méridien divergeant en direction aval.

Grâce à ces dispositions, la grille cathodique virtuelle formée par les électrons attrapés dans ce champ magnétique est aussi inclinée, et cela de manière à propulser dans des directions divergentes les jets de gaz propulsif correspondant à chaque caisson du canal annulaire. Contrairement à des jets convergents, ces jets divergents ne présentent pas l'inconvénient de interférer les uns avec les autres, ce qui permet d'associer chaque caisson à une direction de propulsion sensiblement différente aux autres, et donc d'orienter plus efficacement la direction de la poussée globale du propulseur par une distribution non-uniforme des débits de gaz injectés dans chaque caisson. La divergence du plan méridien du segment aval du canal annulaire permet de limiter l'érosion des parois, et en particulier de la paroi extérieure, par les jets divergents de gaz propulsif ionisé.

Selon un deuxième aspect, le canal annulaire n'est pas axisymétrique. En particulier, il peut présenter une section transversale avec un axe de symétrie principal et un axe de symétrie secondaire, perpendiculaire à l'axe de symétrie principal mais plus court. Comme la composante latérale de la poussée associée à chaque caisson est sensiblement perpendiculaire au pourtour du canal annulaire, une telle configuration non-axisymétrique, privilégiant le débit de gaz propulsif, et donc la poussée, pour certaines directions latérales, est particulièrement adaptée pour des applications, telles que le pilotage de la trajectoire d'un satellite géostationnaire, dans lesquelles la capacité du propulseur à orienter la poussée dans une direction latérale particulière doit être privilégiée par rapport à d'autres directions latérales. Toutefois, dans des modes de réalisation alternatifs, des formes axisymétriques pourraient aussi être envisagées.

Selon un troisième aspect, au moins un dispositif de régulation individuelle de débit est connecté à une unité de commande, permettant ainsi sa commande, la commande conjointe d'une pluralité de tels dispositifs, et même la commande conjointe de plusieurs propulseurs à effet de Hall reliés à la même unité de commande.

Selon un quatrième aspect, les parois concentriques sont en matière céramique, laquelle est particulièrement appropriée par ses caractéristiques électriques, magnétiques et de résistance à l'érosion.

L'invention concerne également un engin spatial incorporant un tel propulseur à effet de Hall à poussée orientable pour la commande d'orientation et/ou trajectoire de l'engin spatial ainsi qu'un procédé de génération d'une poussée orientable par un propulseur à effet de Hall.

Dans au moins un mode de réalisation de ce procédé, des électrons sont émis par une cathode située à l'extérieur d'une extrémité ouverte d'un canal annulaire délimité par deux parois concentriques avec un axe central, et qui comporte un segment aval, du côté de l'extrémité ouverte, avec un plan méridien divergeant en direction aval, un champ magnétique est généré, par un circuit magnétique, à l'extrémité ouverte du canal annulaire, pour piéger des électrons émis par la cathode et générer ainsi un champ électrique entre l'extrémité ouverte et une anode située à une extrémité fermée du canal annulaire. Un gaz propulsif est injecté par un circuit d'injection dans un segment amont du canal annulaire divisé en plusieurs caissons séparés par des parois radiales, chaque caisson recevant un débit de gaz individuellement régulé par un dispositif de régulation. Le gaz propulsif est ionisé par des électrons échappant du champ magnétique en direction de l'anode. Le champ électrique accélère le gaz propulsif ionisé en direction axiale vers l'extrémité ouverte du canal annulaire. Finalement, une grille cathodique virtuelle inclinée par rapport à un plan transversal du propulseur et formée par des électrons piégés par un étage final du circuit magnétique comportant un pôle intérieur et un pôle extérieur opposés et dont le pôle intérieur est décalé axialement en aval par rapport au pôle extérieur, dévie le gaz propulsif radialement vers l'extérieur.

Dans ce procédé, les vannes individuelles peuvent être commandées par une unité de commande, et le module et/ou l'orientation de la poussée peuvent être pilotés afin de commander trajectoire et/ou orientation d'un engin spatial incorporant le propulseur à effet de Hall.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'un propulseur à effet de Hall à poussée orientable suivant ce mode de réalisation ;
- la figure 1A est une vue du haut du propulseur à effet de Hall à poussée orientable de la figure 1 ;
- la figure 1B est une coupe longitudinale du propulseur à effet de Hall à poussée orientable suivant la ligne IB-IB de la figure 1A ;
- les figures 2A, 2B et 2C sont des vues schématiques du haut représentant la génération de poussées latérales par le propulseur de la figure 1 ;
- la figure 3 est une perspective schématique d'un satellite géostationnaire équipé du propulseur à effet de Hall à poussée orientable de la figure 1 pour sa commande d'orientation et orbite.

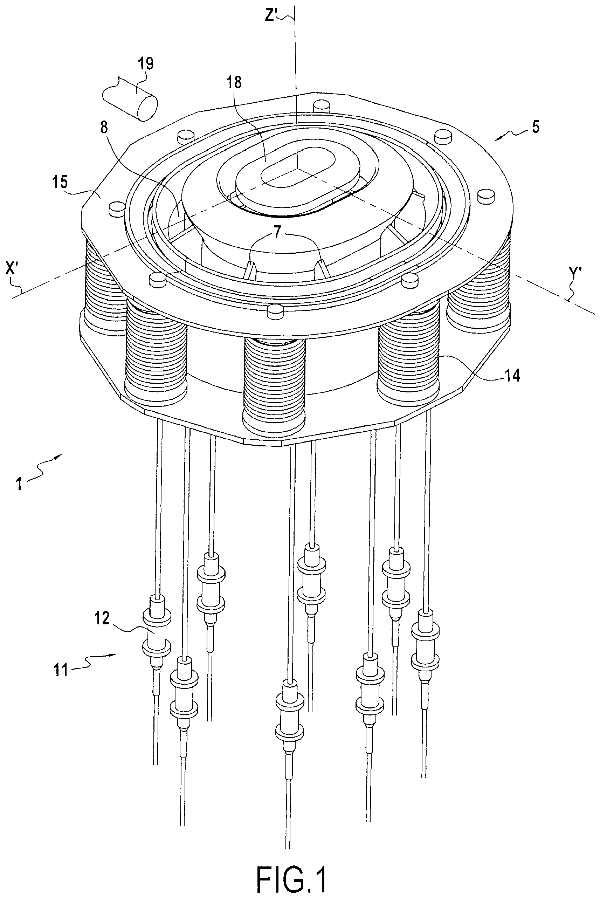

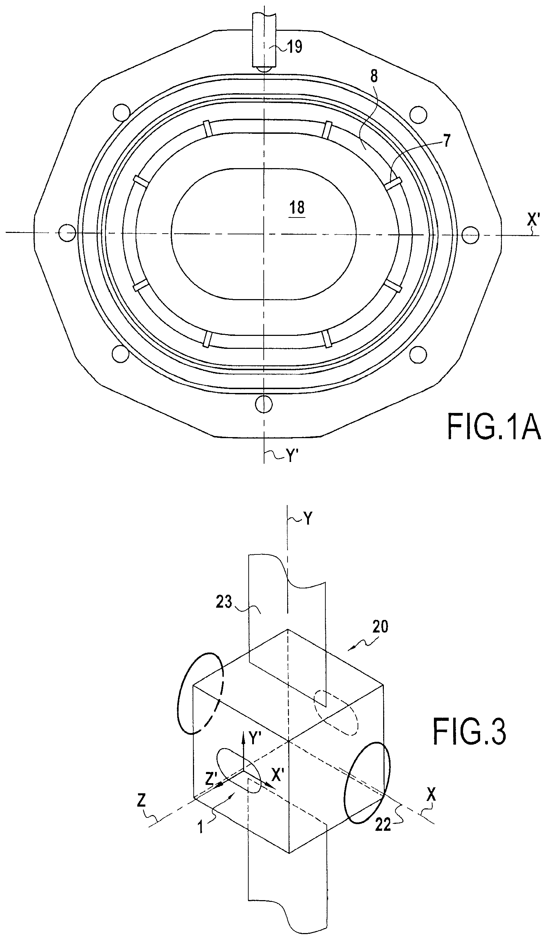

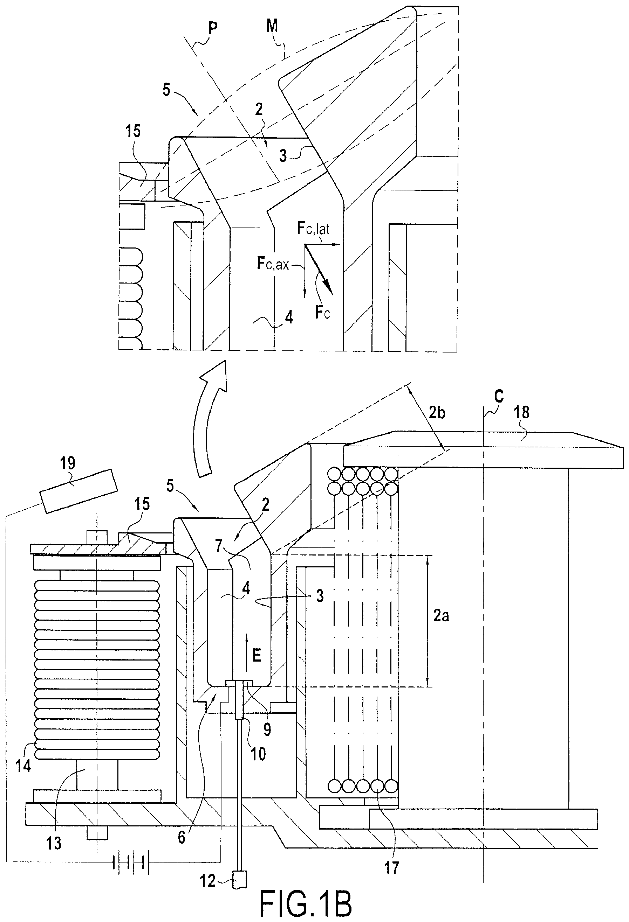

Les figures 1, 1A et 1B illustrent des vues différentes d'un même propulseur 1 à effet de Hall suivant un mode de réalisation. Ce propulseur 1 comporte un canal annulaire 2 délimité par deux parois concentriques 3,4 en matière céramique, avec un axe central Z'. Ce canal annulaire 2 présente une extrémité ouverte 5 et une extrémité fermée 6. Du côté de l'extrémité fermée 6, les parois radiales 7 divisent un segment amont 2a du canal annulaire 2 en caissons 8 séparés. Le canal annulaire 2 présente aussi, à son extrémité fermée 6, une anode 9, qui peut être segmentée entre les différents caissons 8, et une tuyère 10 d'injection de gaz propulsif dans chaque caisson 8. Les tuyères 10 sont connectées à une source de gaz propulsif par un circuit d'injection 11 comportant un dispositif 12 de régulation individuelle de débit pour chaque tuyère 10. Chaque dispositif 12 peut être, par exemple, une vanne crayon ou un thermo-capillaire, c'est-à-dire un capillaire avec des moyens de chauffage permettant d'activement varier sa température et donc le débit traversant. Des tels dispositifs 12 peuvent aussi être complémentés par des restricteurs passifs. Le gaz propulsif peut être du xénon, qui présente les avantages d'un poids moléculaire élevé et un potentiel d'ionisation comparativement bas. Toutefois, comme dans d'autres propulseurs à effet de Hall, une large variété de gaz propulsifs pourrait être utilisée.

Du côté de l'extrémité ouverte 5, le canal annulaire 2 comporte un segment aval 2b incliné latéralement vers l'extérieur. Ainsi, dans ce segment aval 2b, tant la paroi intérieure 3 que la paroi extérieure 4 sont inclinées vers l'extérieur, définissant entre elles un plan méridien P également incliné vers l'extérieur et donc divergeant en direction aval.

Le propulseur 1 comprend aussi un circuit magnétique. Ce circuit magnétique comprend, autour de la paroi extérieure 4, des noyaux magnétiques 13 entourés de bobines 14 et aboutissant dans un pôle extérieur 15 à proximité de l'extrémité ouverte 5 du canal annulaire 2. Le circuit magnétique comprend aussi un noyau magnétique central 16 au centre du propulseur 1 entouré de bobines 17 et aboutissant dans un pôle intérieur 18 de polarité inverse au pôle extérieur 15 et situé opposé à celui-ci à proximité de l'extrémité ouverte 5 du canal annulaire 2, de manière à générer un champ magnétique radial M entre les deux. Par rapport à l'axe central Z', le pôle intérieur 18 est situé en aval du pôle extérieur 15, de manière à ce que le champ magnétique M soit incliné par rapport à un plan transversal, et sensiblement perpendiculaire au plan méridien P. Finalement, le propulseur 1 comprend aussi une cathode creuse 19 située en aval de l'extrémité ouverte 5 du canal annulaire 2.

Le canal annulaire 2 est non-axisymétrique. En particulier, dans le mode de réalisation illustré, sa section transversale est en forme d'hippodrome, avec un axe de symétrie principal X', et un axe de symétrie secondaire Y', plus court. Ainsi, cette section transversale présente deux segments droits et deux segments semi-circulaires reliant les deux segments droits. Le plan méridien P est ainsi plat dans les segments droits, et conique dans les segments semi-circulaires. Toutefois, d'autres formes peuvent être alternativement envisagées, tant non-axisymétriques (par exemple, à section transversale ovale) comme axisymétriques.

En fonctionnement, une tension électrique, typiquement de l'ordre de 150 à 800 V, est établie entre la cathode creuse 19 en aval de l'extrémité ouverte 5 du canal annulaire 2 et l'anode 9 au fond du canal annulaire 2. La cathode creuse 19 commence alors à émettre des électrons, lesquels sont en grande partie piégés dans une enceinte magnétique formée par le champ magnétique M, qui est typiquement de l'ordre de 100 à 300 gauss. Les électrons piégés dans cette enceinte magnétique vont ainsi former une grille cathodique virtuelle. Un champ électrique E est ainsi généré dans le canal annulaire, entre l'anode 9 et cette grille cathodique virtuelle.

Des électrons hautement énergétiques (typiquement 10 à 40 eV) échappent à l'enceinte magnétique en direction de l'anode 9, tandis que du gaz propulsif est injecté dans les caissons 8 à travers les tuyères 10. Des impacts entre ces électrons et des atomes du gaz propulsif ionisent le gaz propulsif, lequel est alors accéléré par le champ électrique E vers l'extrémité ouverte 5 du canal annulaire 2. Comme la masse des ions de gaz propulsif est plusieurs ordres de magnitude plus élevée que celle des électrons, le champ magnétique M ne confine pas ces ions de la même manière. Toutefois, l'inclinaison du champ magnétique M, et donc de la grille cathodique virtuelle formée par les électrons piégés par ce champ magnétique M, introduit une composante latérale dans le champ électrique E, déviant sensiblement vers l'extérieur le gaz propulsif ionisé traversant le segment aval 2b et l'extrémité ouverte 5 du canal annulaire 2. Ainsi, le gaz propulsif injecté dans chaque caisson 8 génère une poussée partielle F_{c} ayant, à part une composante axiale F_{c,ax} parallèle à l'axe central Z', une composante latérale F_{c,lat} dans une direction propre à chaque caisson et perpendiculaire au pourtour du canal annulaire 2.

La poussée globale F du propulseur 1 est la somme des poussées partielles F_{c} correspondant à l'ensemble des caissons 8 alimentés en gaz propulsif. Si les poussées partielles F_{c} sont symétriques, leurs composantes latérales F_{c,lat} s'annuleront mutuellement et la poussée totale sera orientée sensiblement en direction de l'axe central C. Toutefois, si un caisson 8 est alimenté avec un débit en gaz propulsif supérieur à celui d'un caisson 8 opposé, la poussée partielle F_{c} correspondant au caisson 8 alimenté avec le débit supérieur prédominera sur celle correspondant au caisson 8 opposé. Ainsi, la poussée totale F aura aussi une composante latérale Fₗₐₜ.

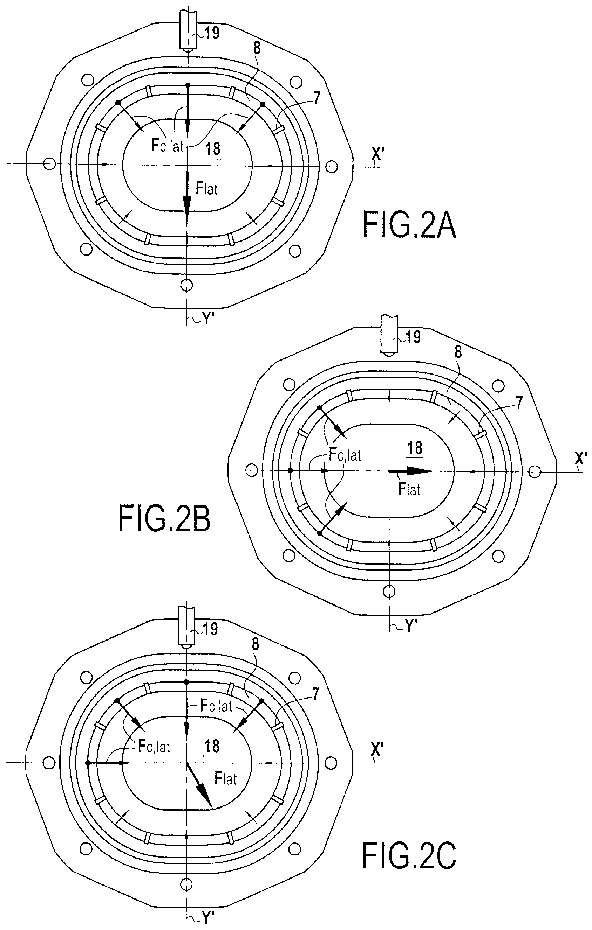

Tournant désormais vers les figures 2A à 2C, on peut mieux apprécier comment la distribution du débit total de gaz propulsif entre les différents caissons 8 affecte la direction et le module de la composante latérale Fₗₐₜ de la poussée totale F du propulseur 1. Ainsi, un cas est illustré sur la figure 2A, dans lequel les caissons 8 situés d'un côté de l'axe de symétrie principal X' sont alimentés avec des débits supérieurs à ceux situés du côté opposé. En conséquence, leurs poussées partielles F_{c} sont également supérieures, et la poussée globale F du propulseur 1 présente une composante latérale Fₗₐₜ perpendiculairement à cet axe de symétrie principal X'. Sur la figure 2B est illustré un autre cas, dans lequel les caissons 8 situés d'un côté de l'axe de symétrie secondaire Y' sont alimentés avec des débits supérieurs à ceux situés du côté opposé. Ainsi, dans ce deuxième cas, la poussée globale F du propulseur 1 présente une composante latérale Fₗₐₜ perpendiculairement à l'axe de symétrie secondaire Y'. Toutefois, à cause de la forme non-axisymétrique du propulseur 1, dans cette direction la composante latérale Fₗₐₜ est moindre que dans le cas précédent. Finalement, il possible de piloter l'alimentation en gaz propulsif des différents caissons 8 pour orienter la composante latérale Fₗₐₜ de la poussée sur 360° autour de l'axe central Z'. Ainsi, sur la figure 2C, un troisième cas est illustré, dans lequel trois quadrants du propulseur 1 sont alimentés en gaz propulsif pour générer une poussée avec une composante Fₗₐₜ latérale inclinée par rapport aux deux axes de symétrie X' et Y'.

La figure 3 illustre un satellite 20 avec deux propulseurs 1 à effet de Hall à poussée orientable pour la commande d'orientation et trajectoire. Le satellite 20 illustré est un satellite géostationnaire avec maintien d'orientation sur trois axes, donc suivant une orbite 22 sensiblement équatoriale et maintenant une orientation sensiblement fixe par rapport à un axe azimutal Z, un axe Est-Ouest X, et un axe Nord-Sud Y. Pour cela, un premier propulseur 1 est fixé sur la face nadir 20a du satellite, et un deuxième propulseur 1 est fixé sur la face anti-nadir 20b du satellite. Les deux propulseurs 1 sont connectés à au moins un réservoir de gaz propulsif (non illustré) et à au moins une source électrique (non illustrée) pour leur alimentation en, respectivement, gaz propulsif et électricité. Les deux propulseurs 1 sont aussi connectés à une unité de commande (non illustrée), laquelle est connectée à des capteurs d'orientation et/ou position (non illustrés), tels que, par exemple, des capteurs d'étoiles, des capteurs solaires, des capteurs de Terre ou d'horizon, des capteurs inertiels, des magnétomètres, des gravimètres, etc. Ainsi, l'unité de commande peut déterminer la trajectoire et l'orientation du satellite 20 et commander les propulseurs 1 pour modifier ou corriger la trajectoire et/ou l'orientation du satellite 20 suivant des instructions préalablement enregistrées ou transmises au satellite 20 depuis une station de base. Typiquement, les panneaux solaires 23 d'un tel satellite géostationnaire sont montés sur des bras orientés dans l'axe Nord-Sud Y, afin de mieux suivre le Soleil pendant l'orbite du satellite 20 par rotation des panneaux 23 autour de l'axe Nord-Sud Y.

Dans le satellite 20 illustré, l'axe central Z' de chaque propulseur 1 est aligné avec l'axe azimutal Z, l'axe de symétrie principal X' est parallèle à l'axe Est-Ouest X, et l'axe de symétrie secondaire Y' est parallèle à l'axe Nord-Sud Y. Ainsi, la direction principale de poussée des deux propulseurs 1 est alignée avec l'axe azimutal Z pour le maintien d'orbite. En même temps, les deux propulseurs 1 peuvent fournir des poussées latérales importantes en direction Nord-Sud, et moins importantes en direction Est-Ouest. Les poussées latérales des propulseurs 1 en direction Nord-Sud permettent le pilotage de l'inclinaison de l'orbite 22, ainsi que de fournir des couples d'orientation du satellite 20 autour de son axe Est-Ouest X. Les poussées latérales des propulseurs 1 en direction Est-Ouest permettent principalement d'orienter le satellite 20 autour de son axe Nord-Sud Y. Il est important de noter qu'en raison de la position des panneaux solaires 23, le moment d'inertie du satellite 20 autour de l'axe Est-Ouest X est typiquement plus important que son moment d'inertie autour de l'axe Nord-Sud Y. La forme non-axisymétrique des propulseurs 1 est ainsi bien adaptée à la commande de l'orientation du satellite 20 autour des axes X et Y.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, des caractéristiques individuelles des différents modes de réalisation illustrés peuvent être combinées dans des modes de réalisation additionnels. Par conséquent, la description et les dessins doivent être considérés dans un sens illustratif plutôt que restrictif.

## Revendications

1. Propulseur (1) à effet de Hall à poussée orientable comportant:
un canal annulaire (2) délimité par deux parois concentriques (3,4) avec un axe central (Z'), le canal annulaire (2) présentant une extrémité ouverte (5) et une extrémité fermée (6), et comportant un segment amont (2a), du côté de l'extrémité fermée (6), divisé par des parois radiales (7) en plusieurs caissons séparés (8) ;
une anode (9) située à l'extrémité fermée (6) du canal annulaire (2) ;
un circuit (11) d'injection de gaz propulsif dans les caissons (8) du canal annulaire (2) comportant au moins un dispositif (12) de régulation individuelle de débit de chaque caisson (8) ;
un circuit magnétique pour générer un champ magnétique (M) à l'extrémité ouverte (5) du canal annulaire (2) ;
une cathode (19) en aval de l'extrémité ouverte (5) du canal annulaire (2) ; et
**caractérisé en ce que,** dans un étage final du circuit magnétique comportant un pôle intérieur (18) et un pôle extérieur (15) opposés, le pôle intérieur (18) est décalé axialement en aval par rapport au pôle extérieur (15), de manière à ce que ledit champ magnétique (M) soit incliné par rapport à un plan transversal du propulseur (1) et **en ce que** le canal annulaire (2) comporte un segment aval (2b), du côté de l'extrémité ouverte (5), avec un plan méridien (P) divergeant en direction aval.

2. Propulseur (1) à effet de Hall suivant la revendication 1, dans lequel le canal annulaire (2) n'est pas axisymétrique.

3. Propulseur (1) à effet de Hall suivant la revendication 2, dans lequel le canal annulaire (2) présente une section transversale avec un axe de symétrie principal (X') et un axe de symétrie secondaire (Y'), perpendiculaire à l'axe de symétrie principal (X') mais plus court.

4. Propulseur (1) à effet de Hall suivant l'une quelconque des revendications 1 à 3, dans lequel l'au moins un dispositif de régulation individuelle de débit (12) est t connecté à une unité de commande.

5. Propulseur à effet de Hall suivant l'une quelconque des revendications 1 à 4, dans lequel les parois concentriques (3,4) sont en matière céramique.

6. Engin spatial (20) incorporant au moins un propulseur (1) à effet de Hall à poussée orientable suivant l'une quelconque des revendications 1 à 5 pour la commande d'orientation et/ou trajectoire de l'engin spatial (20).

7. Procédé de génération d'une poussée orientable par un propulseur (1) à effet de Hall, dans lequel :
des électrons sont émis par une cathode (19) située en aval d'une extrémité ouverte (5) d'un canal annulaire (2) délimité par deux parois concentriques (3,4) avec un axe central (Z'), le canal annulaire (2) comportant un segment aval (2b), du côté de l'extrémité ouverte (5), avec un plan méridien (P) divergeant en direction aval ;
un champ magnétique radial (M) est généré, par un circuit magnétique, à l'extrémité ouverte (5) du canal annulaire (2), pour piéger des électrons émis par la cathode (19) et générer ainsi un champ électrique (E) entre l'extrémité ouverte (5) et une anode (9) située à une extrémité fermée (6) du canal annulaire (2) ;
un gaz propulsif est injecté par un circuit d'injection (11) dans un segment amont (2a) du canal annulaire (2) divisé en plusieurs caissons (8) séparés par des parois radiales (7), chaque caisson (8) recevant un débit de gaz individuellement régulé par au moins un dispositif de régulation (12) ;
le gaz propulsif est ionisé par des électrons échappant au champ magnétique (M) en direction de l'anode (9) ;
le champ électrique (E) accélère le gaz propulsif ionisé en direction axiale vers l'extrémité ouverte (5) du canal annulaire (2) ; et
une grille cathodique virtuelle, inclinée par rapport à un plan transversal du propulseur (1) et formée par des électrons piégés par un étage final du circuit magnétique comportant un pôle intérieur (18) et un pôle extérieur (15) opposés et dont le pôle intérieur (18) est décalé axialement en aval par rapport au pôle extérieur (15), dévie radialement vers l'extérieur le gaz propulsif ionisé.

8. Procédé de génération d'une poussée orientable suivant la revendication 7, dans lequel l'au moins un dispositif de régulation (12) est commandé par une unité de commande.

9. Procédé de génération d'une poussée orientable suivant l'une quelconque des revendications 7 ou 8, dans lequel le module et/ou l'orientation de la poussée sont pilotés afin de commander trajectoire et/ou orientation d'un engin spatial (20) incorporant le propulseur (1) à effet de Hall.

## Patentansprüche

1. Hall-Effekt-Antrieb (1) mit verstellbarem Schub, umfassend:
einen Ringkanal (2), der durch zwei konzentrische Wände (3, 4) mit einer Mittelachse (Z') begrenzt ist, wobei der Ringkanal (2) ein offenes Ende (5) und ein geschlossenes Ende (6) aufweist und einen stromaufwärtigen Abschnitt (2a) auf der Seite des geschlossenen Endes (6) umfasst, der durch radiale Wände (7) in mehrere getrennte Kammern (8) unterteilt ist,
eine Anode (9), die am geschlossenen Ende (6) des Ringkanals (2) gelegen ist,
einen Kreis (11) zum Einspritzen von Treibgas in die Kammern (8) des Ringkanals (2), umfassend wenigstens eine Vorrichtung (12) zur individuellen Mengenregelung einer jeden Kammer (8),
einen Magnetkreis zum Erzeugen eines Magnetfeldes (M) am offenen Ende (5) des Ringkanals (2),
eine Kathode (19) stromabwärts des offenen Endes (5) des Ringkanals (2), und
**dadurch gekennzeichnet, dass** in einer Endstufe des Magnetkreises mit einem inneren Pol (18) und einem äußeren Pol (15), welche einander gegenüberliegen, der innere Pol (18) in Bezug auf den äußeren Pol (15) stromabwärts axial versetzt ist, so dass das Magnetfeld (M) gegenüber einer Querebene des Antriebs (1) geneigt ist, und dass der Ringkanal (2) einen stromabwärtigen Abschnitt (2b) auf der Seite des offenen Endes (5), mit einer in stromabwärtiger Richtung divergierenden Meridianebene (P) umfasst.

2. Hall-Effekt-Antrieb (1) nach Anspruch 1, bei dem der Ringkanal (2) nicht achsensymmetrisch ist.

3. Hall-Effekt-Antrieb (1) nach Anspruch 2, bei dem der Ringkanal (2) einen Querschnitt mit einer Hauptsymmetrieachse (X') und einer Nebensymmetrieachse (Y'), welche senkrecht zur Hauptsymmetrieachse (X') verläuft, aber kürzer ist, aufweist.

4. Hall-Effekt-Antrieb (1) nach einem der Ansprüche 1 bis 3, bei dem die wenigstens eine Vorrichtung zur individuellen Mengenregelung (12) mit einer Steuereinheit verbunden ist.

5. Hall-Effekt-Antrieb nach einem der Ansprüche 1 bis 4, bei dem die konzentrischen Wände (3, 4) aus keramischem Material bestehen.

6. Raumfahrzeug (20), enthaltend wenigstens einen Hall-Effekt-Antrieb (1) mit verstellbarem Schub nach einem der Ansprüche 1 bis 5 zur Steuerung von Ausrichtung und/oder Flugbahn des Raumfahrzeugs (20).

7. Verfahren zum Erzeugen eines verstellbaren Schubs durch einen Hall-Effekt-Antrieb (1), bei dem:
Elektronen durch eine Kathode (19) emittiert werden, die stromabwärts eines offenen Endes (5) eines Ringkanals (2), welcher durch zwei konzentrische Wände (3,4) mit einer Mittelachse (Z') begrenzt ist, gelegen ist, wobei der Ringkanal (2) einen stromabwärtigen Abschnitt (2b) auf der Seite des offenen Endes (5), mit einer in stromabwärtiger Richtung divergierenden Meridianebene (P) umfasst,
ein radiales Magnetfeld (M) durch einen Magnetkreis an dem offenen Ende (5) des Ringkanals (2) erzeugt wird, um durch die Kathode (19) emittierte Elektronen einzufangen und um so ein elektrisches Feld (E) zwischen dem offenen Ende (5) und einer an einem geschlossenen Ende (6) des Ringkanals (2) gelegenen Anode (9) zu erzeugen,
ein Treibgas durch einen Einspritzkreis (11) in einen stromaufwärtigen Abschnitt (2a) des Ringkanals (2), welcher durch radiale Wände (7) in mehrere getrennte Kammern (8) unterteilt ist, eingespritzt wird, wobei jede Kammer (8) eine Gasmenge aufnimmt, die durch wenigstens eine Regelungsvorrichtung (12) individuell geregelt wird,
das Treibgas durch Elektronen ionisiert wird, die aus dem Magnetfeld (M) in Richtung der Anode (9) austreten,
das elektrische Feld (E) das ionisierte Treibgas in axialer Richtung zum offenen Ende (5) des Ringkanals (2) hin beschleunigt, und
ein virtuelles Kathodengitter, das gegenüber einer Querebene des Antriebs (1) geneigt ist und durch Elektronen gebildet ist, welche durch eine Endstufe des Magnetkreises eingefangen werden, die einen inneren Pol (18) und einen äußeren Pol (15) umfasst, welche einander gegenüberliegen und von denen der innere Pol (18) in Bezug auf den äußeren Pol (15) stromabwärts axial versetzt ist, das ionisierte Treibgas radial nach außen ablenkt.

8. Verfahren zur Erzeugung eines verstellbaren Schubs nach Anspruch 7, bei dem die wenigstens eine Regelungsvorrichtung (12) durch eine Steuereinheit gesteuert wird.

9. Verfahren zur Erzeugung eines verstellbaren Schubs nach einem der Ansprüche 7 oder 8, bei dem der Modul und/oder die Ausrichtung des Schubs gesteuert werden, um Flugbahn und/oder Ausrichtung eines den Hall-Effekt-Antrieb (1) enthaltenden Raumfahrzeugs (20) zu steuern.

## Claims

1. A steerable-thrust Hall effect thruster (1) comprising:
an annular channel (2) defined by two concentric walls (3, 4) with a central axis (Z'), the annular channel (2) presenting an open end (5) and a closed end (6), and having an upstream segment (2a) beside the closed end (6) that is subdivided by radial walls (7) into a plurality of separate compartments (8);
an anode (9) situated at the closed end (6) of the annular channel (2);
an injection circuit (11) for injecting propulsion gas into the compartments (8) of the annular channel (2), the circuit including at least one individual flow rate regulator device (12) for each compartment (8);
a magnetic circuit for generating a magnetic field (M) at the open end (5) of the annular channel (2); and
a cathode (19) downstream from the open end (5) of the annular channel (2);
the thruster being **characterized in that**, in a final stage of the magnetic circuit comprising an inner pole (18) and a facing outer pole (15), the inner pole (18) is offset axially downstream relative to the outer pole (15), so that said magnetic field (M) is inclined relative to a transverse plane of the thruster (1), and **in that** the annular channel (2) has a downstream segment (2b) beside the open end (5) with a meridian plane (P) that diverges in the downstream direction.

2. A Hall effect thruster (1) according to claim 1 or claim 1, wherein the annular channel (2) is not axisymmetric.

3. A Hall effect thruster (1) according to claim 2, wherein the annular channel (2) presents a cross-section with a main axis of symmetry (X') and a secondary axis of symmetry (Y') that is perpendicular to and shorter than the main axis of symmetry (X').

4. A Hall effect thruster (1) according to any one of claims 1 to 3, wherein the at least one individual flow rate regulator device (12) is connected to a control unit.

5. A Hall effect thruster according to any one of claims 1 to 4, wherein the concentric walls (3, 4) are made of ceramic material.

6. A space vehicle (20) incorporating at least one steerable-thrust Hall effect thruster (1) according to any one of claims 1 to 5 for controlling the attitude and/or the trajectory of the space vehicle (20).

7. A method of generating steerable thrust by means of a Hall effect thruster (1), the method comprising the steps of:
emitting electrons from a cathode (19) situated downstream from an open end (5) of an annular channel (2) defined by two concentric walls (3, 4) with a central axis (Z'), the annular channel (2) comprising a downstream segment, beside the open end(5), with a meridian plane that diverges in the downstream direction;
generating a radial magnetic field (M) by means of a magnetic circuit at the open end (5) of the annular channel (2) in order to trap the electrons emitted by the cathode (19), thereby generating an electric field (E) between the open end (5) and an anode (9) situated at a closed end (6) of the annular channel (2);
injecting a propulsion gas via an injection circuit (11) into an upstream segment (2a) of the annular channel (2) that is subdivided into a plurality of separate compartments (8) by radial walls (7), each compartment (8) receiving a flow of gas that is individually regulated by at least one regulator device (12);
ionizing the propulsion gas by means of electrons escaping from the magnetic field (M) towards the anode (9) ;
accelerating the ionized propulsion gas by means of the electric field (E) in the axial direction towards the open end (5) of the annular channel (2); and
deflecting the ionized propulsion gas radially outwards by means of a virtual cathode grid that is inclined relative to a transverse plane of the thruster (1) and that is formed by electrons trapped by a final stage of the magnetic circuit comprising an inner pole (18) and a facing outer pole (15) with the inner pole (18) being axially offset downstream relative to the outer pole (15).

8. A method of generating steerable thrust according to claim 7, wherein at least one regulator device (12) is controlled by a control unit.

9. A method of generating steerable thrust according to claim 7 or claim 8, wherein the modulus and/or the orientation of the thrust are controlled in order to control the trajectory and/or the attitude of a space vehicle (20) incorporating the Hall effect thruster (1).
